# EUROPÄISCHE PATENTANMELDUNG

(11) **EP 1 223 363 A2**
(43) Veröffentlichungstag der Anmeldung: **17.07.2002**
(21) Anmeldenummer: 01127603.7
(22) Anmeldetag: 20.11.2001
(51) Int. Cl.: F16F 9/16, B62D 1/19

(54) **Lenksäulendämpfer**

(30) Priorität: 10.01.2001 DE 10100726
(71) Anmelder: SUSPA Holding GmbH, 90518 Altdorf (DE); Bayerische Motoren Werke Aktiengesellschaft, 80809 München (DE); WILLI ELBE GELENKWELLEN GMBH & CO KG, 71732 Tamm (DE)
(72) Erfinder: Schröter, Frank, 85368 Moosburg (DE); Prottengeier, Edgar, 90480 Nürnberg (DE); Nagl, Wolfgang, 90584 Allersberg (DE); Scharf, Jens, 90587 Tuchenbach (DE); Hauhoff, Jörg, 71636 Ludwigsburg (DE); Meyle, Lothar, 74321 Bietingheim-Bissingen (DE)
(74) Vertreter: Rau, Albrecht

(57) **Zusammenfassung**

Lenksäulendämpfer für ein Kraftfahrzeug mit einem Mantelrohr (2) mit einer Mittel-Längs-Achse (3), einem in dem Mantelrohr (2) verschiebbar geführten Gleitrohr (4), einer gegenüber dem Gleitrohr (4) und/oder dem Mantelrohr (2) um die Mittel-Längs-Achse (3) verschwenkbar gelagerten, durch das Mantelrohr (2) und das Gleitrohr (4) geführten Lenkwelle (14), mindestens einem zwischen dem Mantelrohr (2) und dem Gleitrohr (4) angeordneten, mit einem Dämpfüngs-Medium (20) gefüllten Arbeitsraum (21), mindestens einer mit dem Gleitrohr (4) verbundenen Arbeitsraum-Volumenreduktions-Einheit zur Reduktion des Volumens des mindestens einen Arbeitsraumes (21) beim Einschieben des Gleitrohres (4) in das Mantelrohr (2), mindestens einer den mindestens einen Arbeitsraum (21) mit der Umgebung verbindenden Öffnung (24) zur Abführung des DämpfungsMediums aus dem jeweiligen Arbeitsraum (21), jeweils einem Verschlußelement (25) zum Verschließen der mindestens einen Öffnung (24) und einer Auslöse-Einheit (27) zur steuerbaren Öffnung des jeweiligen Verschlußelements (25).

## Beschreibung

Die Erfindung betrifft einen Lenksäulendämpfer für Kraftfahrzeuge.

Aus der DE 199 59 107 A1 sind zahlreiche Dämpfer für Kraftfahrzeuglenksäulen bekannt. Diese weisen jeweils ein mit einem Dämpfungsmedium gefülltes rohrförmiges Gehäuse auf, in das ein Kolben bei einem Aufprall mit verschiedenen Kraft-Weg-Kennlinien einschiebbar ist. Die Dämpfer sind durch eine elektronische Auslöseeinheit auslösbar. Die Dämpfer müssen neben der Lenksäule angeordnet werden.

Der Erfindung liegt die Aufgabe zugrunde, einen möglichst kompakten Lenksäulendämpfer zu schaffen.

Die Aufgabe wird durch die Merkmale des Anspruches 1 gelöst. Der Kern der Erfindung besteht darin, eine Dämpfungs-Einheit unmittelbar im Bereich des Mantelrohres und des in dieses einschiebbaren Gleitrohres vorzusehen, wobei die Lenkwelle durch beide Rohre hindurchgeführt ist.

Weitere vorteilhafte Ausgestaltungen der Erfindung ergeben sich aus den Unteransprüchen.

Zusätzliche Merkmale und Einzelheiten der Erfindung ergeben sich aus der Beschreibung von sechs Ausführungsbeispielen anhand der Zeichnungen.

Es zeigen:
- Fig. 1: ein Längsschnitt durch einen Lenksäulendämpfer gemäß einer ersten Ausführungsform mit einem Verschlußelement,
- Fig. 2: einen Längsschnitt durch das Verschlußelement gemäß Fig. 1,
- Fig. 3: einen Längsschnitt durch einen Lenksäulendämpfer gemäß einer zweiten Ausführungsform,
- Fig. 4: eine Querschnittsdarstellung gemäß der Schnittlinie IV-IV in Fig. 3,
- Fig. 5: eine Querschnittsdarstellung gemäß der Schnittlinie V-V gemäß Fig. 3,
- Fig. 6: einen Längsschnitt durch das Verschlußelement gemäß Fig. 3,
- Fig. 7: eine Seitenansicht eines Lenksäulendämpfers gemäß einer dritten Ausführungsform,
- Fig. 8: einen Längsschnitt durch den Lenksäulendämpfer gemäß Fig. 7,
- Fig. 9: einen Längsschnitt durch einen Lenksäulendämpfer gemäß einer vierten Ausführungsform,
- Fig. 10: eine Querschnittsdarstellung gemäß der Schnittlinie X-X in Fig. 9,
- Fig. 11: eine Querschnittsdarstellung gemäß der Schnittlinie XI-XI in Fig. 9,
- Fig. 12: einen Längsschnitt durch einen Lenksäulendämpfer gemäß einer fünften Ausführungsform in Ausgangsstellung,
- Fig. 13: einen Querschnitt gemäß der Schnittlinie XIII-XIII in Fig. 12,
- Fig. 14: einen Querschnitt gemäß der Schnittlinie XIV-XIV in Fig. 12,
- Fig. 15: einen Längsschnitt des Lenksäulendämpfers gemäß Fig. 12 in Auslösestellung,
- Fig. 16: einen Querschnitt gemäß der Schnittlinie XVI-XVI in Fig. 15,
- Fig. 17: einen Querschnitt gemäß der Schnittlinie XVII-XVII in Fig. 15,
- Fig. 18: einen Längsschnitt eines Lenksäulendämpfers gemäß einer sechsten Ausführungsform und
- Fig. 19: einen Querschnitt gemäß der Schnittlinie XIX-XIX in Fig. 18.

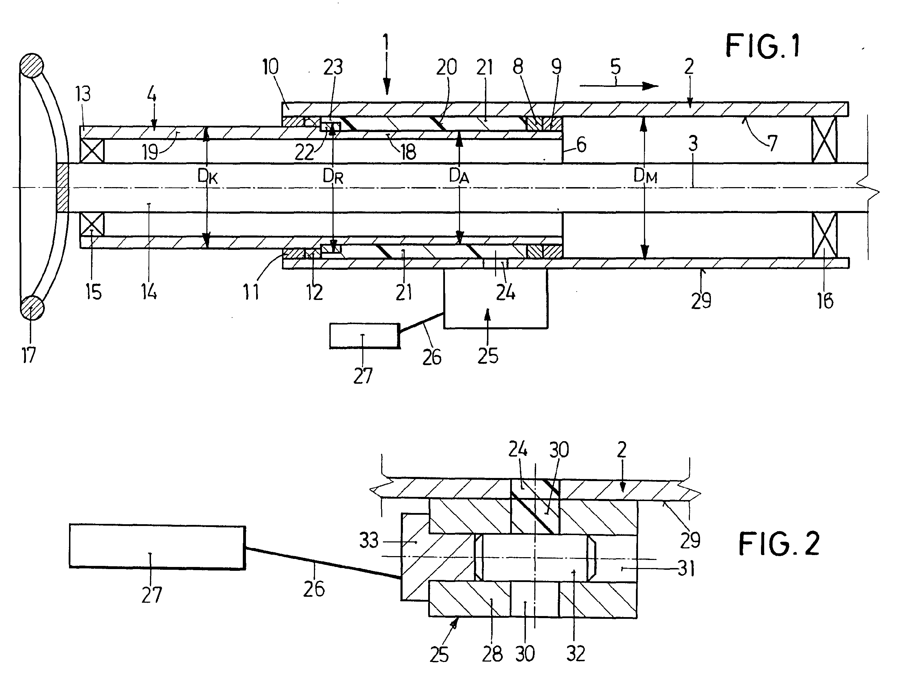

Im folgenden wird unter Bezugnahme auf die Fig. 1 und 2 eine erste Ausführungsform der Erfindung beschrieben. Ein Lenksäulendämpfer 1 für ein Kraftfahrzeug weist ein gegenüber der Karosserie des Kraftfahrzeuges festgelegtes bzw. festlegbares ringzylindrisches Mantelrohr 2 mit einer Mittel-Längsachse 3 auf. In dem Mantelrohr 2 ist ein konzentrisch zur Mittel-Längs-Achse 3 angeordnetes Gleitrohr 4 verschiebbar geführt und entlang einer parallel zur Mittel-Längs-Achse 3 verlaufenden Einschubrichtung 5 in das Mantelrohr 2 einschiebbar. Hierzu ist am in Einschubrichtung 5 gelegenen Ende 6 des Gleitrohres 4 ein gegenüber den Innenwand 7 des Mantelrohres 2 dichtend anliegender Dichtungsring 8 sowie ein in Richtung 5 nachgeordneter, mit dem Gleitrohr 4 verbundener Führungsring 9 befestigt. Am entgegen der Richtung 5 liegenden Ende 10 des Mantelrohres 2 sind ein mit dem Mantelrohr 2 verbundener Führungsring 11 sowie in Richtung 5 nachgeordnet ein Dichtungsring 12 angeordnet, die gegenüber dem Gleitrohr 4 anliegen. Das freie Ende 13 des Gleitrohres 4 befindet sich in der in Fig. 1 dargestellten Ausgangsstellung außerhalb des Mantelsrohres 2. Durch das Gleitrohr 4 und das Mantelrohr 2 ist eine konzentrisch zur Mittel-Längs-Achse 3 angeordnete Lenkwelle 14 angeordnet, die durch Lager 15 und 16 gegenüber dem Gleitrohr 4 bzw. dem Mantelrohr 2 verschwenkbar gelagert ist. Die Lenkwelle 14 ist am in Richtung 5 liegenden - nicht dargestellten - Ende mit den zu lenkenden Rädern des Kraftfahrzeuges verbunden. Am entgegen der Richtung 5 liegenden Ende der Lenkwelle 14 ist ein Lenkrad 17 befestigt.

Das Gleitrohr 4 weist einen sich in der in Fig. 1 dargestellten Ausgangsstellung von dem Dichtungsring 12 in Richtung 5 erstreckenden Arbeitsraum-Abschnitt 18 mit einem Außendurchmesser D_{A} auf. Entgegen der Richtung 5 schließt sich daran ein ebenfalls ringzylindrischer Kolbenabschnitt 19 an, der einen Außendurchmesser D_{K} aufweist. Der Kolbenabschnitt 19 ist als Arbeitsraum-Volumenreduktions-Einheit ausgebildet. Der Innendurchmesser des Mantelrohres 2 beträgt D_{M}. Für die zuvor genannten Durchmesser gilt: D_{A} < D_{K} < D_{M}. Zwischen den Dichtungsringen 8 und 12 einerseits und dem Arbeitsraum-Abschnitt 18 des Gleitrohres 4 und dem Mantelrohr 2 andererseits befindet sich ein mit einem Dämpfungsmedium 20 gefüllter Arbeitsraum 21. Am entgegen der Richtung 5 gelegenen Ende des Arbeitsraum-Abschnitts 18 ist ein mit dem Gleitrohr 4 verbundener Ring 22 vorgesehen. Der Außendurchmesser D_{R} des Ringes 22 ist derart gewählt, daß zwischen dem Ring 22 und der Innenwand 7 ein Drosselspalt 23 verbleibt. Es ist auch möglich, den Außendurchmesser D_{R} des Ringes 22 derart zu wählen, daß der Ring 22 an der Innenwand 7 anliegt. Dies bedeutet, daß abgesehen von einem erforderlichen Spiel D_{R} und D_{M} gleich groß sind. In diesem Fall übernimmt der Ring 22 die Funktion der Arbeitsraum-Volumenreduktions-Einheit. In dem Mantelrohr 2 ist im Bereich des Arbeitsraumes 21 eine Öffnung 24 vorgesehen, die durch ein Verschlußelement 25 verschließbar ist bzw. sich öffnen läßt. Das Verschlußelement 25 ist über eine Leitung 26 mit einer Auslöseeinheit 27 zur steuerbaren Öffnung des Verschlußelements 25 verbunden.

Der Arbeitsraum 21 ist mit einem Feststoff als Dämpfungsmedium 20 gefüllt. Derartige kompressible Feststoffe sind beispielsweise aus der US 3 053 526 bekannt. Sie sind marktgängig, beispielsweise unter der Handelsmarke "SILASTIC" der DOW-Corning Corporation, USA. Sie werden beispielsweise in Aufprallstoßdämpfern für Automobile eingesetzt, wie sie aus der DE 21 49 759 C3 (entsprechend US 3,713,641) bekannt sind. Derartige kompressible Feststoffe sind reversibel kompressibel, d. h. ihr Volumen verringert sich unter Druck, und zwar zunehmend mit entsprechender Erhöhung des Drucks. Bei Druckentlastung nehmen sie wieder ihr ursprüngliches Volumen ein. Insgesamt haben sie also auch entsprechende elastische Eigenschaften. Darüber hinaus tritt bei einer Druckerhöhung eine Verflüssigung des Feststoffs ein, so daß sich dieser ähnlich einer Flüssigkeit verhält. Es können jedoch auch andere Dämpfungsmedien 20 verwendet werden.

Das Verschlußelement 25 weist ein im wesentlichen massives Gehäuse 28 auf, das an der Außenseite 29 des Mantelrohres 2 vor der Öffnung 24 befestigt ist. In dem Gehäuse 28 ist eine fluchtend zur Öffnung 24 angeordnete Auslaßbohrung 30 vorgesehen, deren eines Ende mit der Umgebung verbunden ist. Senkrecht zur Bohrung 30 verläuft eine diese durchdringende Verschlußbohrung 31, deren eines Ende gegenüber der Umgebung offen ist. In dem Kreuzungsbereich der Bohrungen 30, 31 ist ein die Bohrung 30 nach außen verschließender zylindrischer Bolzen 32 in der in Fig. 2 dargestellten Ausgangsstellung angeordnet. In Fig. 2 links neben dem Bolzen 32 ist in der Bohrung 31 eine Zündkapsel 33 angeordnet, die durch ein elektrisches Signal von der Auslöseeinheit 27 zur Zündung gebracht werden kann. Es ist auch möglich, anstelle der Zündkapsel 33 z.B. einen Elektromagneten zur Verschiebung des Bolzens 32 vorzusehen. Hinsichtlich der möglichen Alternativen zum Aufbau des Verschlußelements 25 wird hiermit ausdrücklich auf die DE 199 59 107 A1 verwiesen.

Im folgenden wird die Funktionsweise des Lenksäulendämpfers 1 beschrieben. In der in Fig. 1 dargestellten Ausgangsstellung steht das Dämpfungsmedium 20 unter einem Vorspanndruck, so daß sich die Einheit aus Mantelrohr 2 und Gleitrohr 4 im wesentlichen wie eine starre Säule verhält. Der Ring 22 verhindert ein Ausschieben des Gleitrohres 4 entgegen der Richtung 5. Das Lenkrad 17 und die Lenkwelle 14 sind normal betätigbar. Bei einem Aufprall des Kraftfahrzeuges löst die elektronische Steuerung des Airbags diesen aus. In Abhängigkeit von zahlreichen Faktoren, wie der Schwere des Aufpralls, der Insassengröße, des Insassengewichts und der Gurtbenutzung wird ein Zündsignal von der Auslöse-Einheit 27 auf die Zündkapsel 33 gegeben, die dadurch zur Explosion gebracht wird. Durch den entstehenden Druck wird der Bolzen 32 in Fig. 2 nach rechts verschoben, so daß die Bohrung 30 gegenüber der Umgebung freigibt. Durch den Aufprall des Fahrers des Kraftfahrzeuges auf das Lenkrad 17 mit dem Airbag wird das Gleitrohr 4 in das Mantelrohr 2 eingeschoben. Da der Außendurchmesser D_{K} des Kolbenabschnitts 19 größer ist als der Außendurchmesser D_{A} des Arbeitsraum-Abschnittes 18 wird das Volumen des Arbeitsraumes 21 durch das Einschieben des Gleitrohres 4 in Richtung 5 reduziert. Das verdrängte Dämpfungs-Medium 20 entweicht durch die Öffnung 24 und die Bohrung 30 nach außen in die Umgebung. Gleichzeitig wird der Ring 22 in Richtung 5 verschoben, so daß hinter dem Ring 22 ein Freiraum entsteht, der mit dem Dämpfungs-Medium 20 aus dem Arbeitsraum 21 gefüllt wird. Das Dämpfungs-Medium 20 fließt hierbei durch den Drosselspalt 23. Die Dämpfungswirkung entsteht somit zum einen durch das Ausschieben des Dämpfungs-Mediums 20 durch die Öffnung 24 und zum anderen durch das Vorbeiströmen des Dämpfungs-Mediums 20 durch den Drosselspalt 23. Für den Fall, daß der Außendurchmesser D_{R} des Ringes 22 dem Innendurchmesser D_{M} des Mantelrohres entspricht, entsteht die Dämpfungswirkung lediglich durch das Ausschieben des Dämpfungs-Mediums 20 durch die Öffnung 24, da der Drosselspalt 23 in diesem Fall nicht existiert. Ein besonderer Vorteil des Lenksäulendämpfers 1 besteht darin, daß die Lenkwelle 14 in den Dämpfer integriert ist, so daß eine besonders kompakte Anordnung möglich ist. Darüber hinaus ist die Gesamtanordnung im wesentlichen rotationssymmetrisch, so daß die auftretenden Kräfte gleichmäßig verteilt sind.

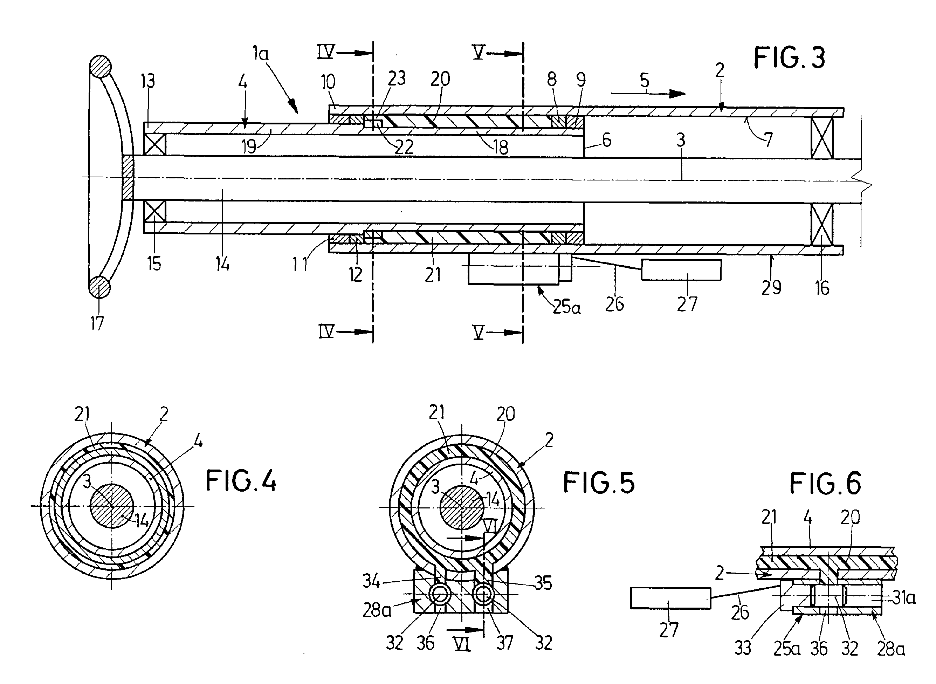

Im folgenden wird unter Bezugnahme auf die Fig. 3 bis 6 eine zweite Ausführungsform der Erfindung beschrieben. Identische Teile erhalten dieselben Bezugszeichen wie bei der ersten Ausführungsform, auf deren Beschreibung hiermit verwiesen wird. Konstruktiv unterschiedliche, jedoch funktionell gleichartige Teile erhalten dieselben Bezugszeichen mit einem dahintergesetzten "a". Der zentrale Unterschied gegenüber der ersten Ausführungsform besteht darin, daß anstelle der einen Öffnung 24 zwei Öffnungen 34, 35 vorgesehen sind. Den Öffnungen 34 und 35 sind in dem Gehäuse 28a zwei nach außen führende Bohrungen 36 bzw. 37 nachgeordnet. Senkrecht zu diesen verläuft jeweils eine Verschlußbohrung 31a, in der ein Bolzen 32 in der Weise angeordnet ist, daß er die Öffnungen 34 bzw. 35 verschließt. Benachbart zu jedem Bolzen 32 ist eine Zündkapsel 33 vorgesehen, die einzeln von der Auslöseeinheit 27 zündbar ist. Die Öffnung 34 weist denselben Durchmesser auf wie die Bohrung 36. Die Öffnung 35 weist denselben Durchmesser auf wie die Bohrung 37. Die Durchmesser der Öffnungen 34 und 35 sind verschieden groß und verhalten sich beispielsweise wie 1:2. Bei einem Aufprall kann die Auslöseeinheit 27 die Öffnung 34 freigeben. In diesem Fall ist eine große Einschubkraft in Richtung 5 zum Einschieben des Gleitrohres 4 erforderlich. Gibt die Auslöseeinheit 27 die Öffnung 35 frei, so ist die erforderliche Kraft niedriger, da der Querschnitt der Öffnung 35 größer ist als der der Öffnung 34. In einem dritten Fall kann die Auslöseeinheit 27 beide Öffnungen freigeben, wodurch eine noch niedrigere Einschubkraft erforderlich ist. Es lassen sich somit drei verschiedene Dämpfungsverhalten einstellen. Für den Fall, daß die Auslöseeinheit 27 über weitere Daten des Fahrers verfügt, wie z.B. dessen Größe und Gewicht, sowie über weitere Daten über den Unfall, kann die Auslöseeinheit 27 das Dämpfüngsverhalten in drei verschiedenen Stufen einstellen und somit der Unfallsituation besser anpassen.

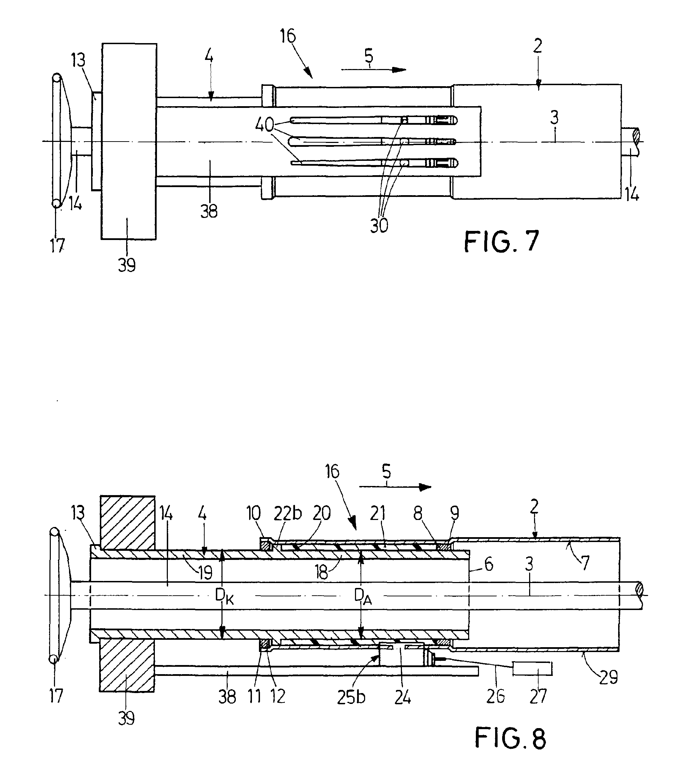

Im folgenden wird unter Bezugnahme auf die Fig. 7 und 8 eine dritte Ausführungsform der Erfindung beschrieben. Identische Teile erhalten dieselben Bezugszeichen wie bei der ersten Ausführungsform, auf deren Beschreibung hiermit verwiesen wird. Konstruktiv unterschiedliche, jedoch funktionell gleichartige Teile erhalten dieselben Bezugszeichen mit einem dahintergesetzten "b". Der Lenksäulendämpfer 1b weist im wesentlichen denselben Aufbau auf, wie der Lenksäulendämpfer 1. Ein Unterschied besteht darin, daß der Außendurchmesser D_{K} des Kolbenabschnitts 19 und der Außendurchmesser D_{A} des Arbeitsraum-Abschnitts 18 identisch sind. Die Arbeitsraum-Volumenreduktions-Einheit wird in diesem Fall durch den einteilig mit dem Gleitrohr 4 ausgebildeten Ring 22b gebildet, der an der Innenwand 7 anliegt und auf diese Weise den Arbeitsraum 21 beim Einschieben des Gleitrohres 4 entleert. Im Bereich des Verschlußelementes 25b sind in dem Mantelrohr 2 drei benachbart zueinander angeordnete Öffnungen 24 vorgesehen, die in derselben Weise verschließbar und freigebbar sind, wie dies in Fig. 2 dargestellt ist. Vor den Bohrungen 30 ist ein Schieber 38 geführt. Der Schieber 38 ist im Bereich des Endes 13 über eine mit dem Gleitrohr 4 verbundene Platte 39 derart befestigt, daß der Schieber 38 parallel zur Mittel-Längs-Achse 3 verläuft. Der Schieber 38 weist drei sich in Richtung 5 erstreckende Langlöcher 40 auf. Die Breite der Langlöcher 40 ändert sich über die Länge. Die Bohrungen 30 liegen hinter den jeweiligen Langlöchern 40.

Im folgenden wird die Funktionsweise des Lenksäulendämpfers 1b beschrieben. Bei einem Aufprall öffnet die Auslöseeinheit 27 je nach gewünschter Dämpfungswirkung eine oder mehrere Öffnungen 24, so daß das Dämpfungsmedium 20 durch die Bohrungen 30 und die Langlöcher 40 austreten kann. Durch das Einschieben des Gleitrohres 4 wird parallel dazu der Schieber 38 in Richtung 5 verschoben. Durch die sich über die Länge des jeweiligen Langlochs 40 verändernde Breite des Langlochs ändert sich der Ausströmquerschnitt von der Bohrung 30 und damit über die Einschubtiefe des Gleitrohres 4 die zugehörige Dämpfungskennlinie. Nimmt die Breite des Langlochs 40 mit der Einschubtiefe zu, so nimmt die zum Einschub erforderliche Kraft entsprechend ab und umgekehrt.

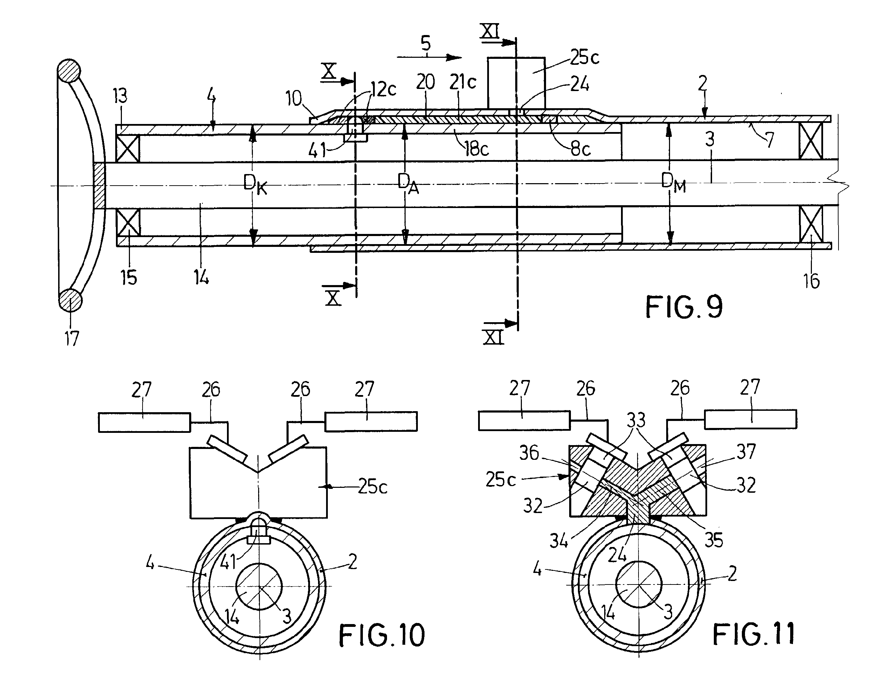

Im Folgenden wird unter Bezugnahme auf die Fig. 9 bis 11 eine vierte Ausführungsform der Erfindung beschrieben. Identische Teile erhalten dieselben Bezugszeichen wie bei der ersten Ausführungsform, auf deren Beschreibung hiermit verwiesen wird. Konstruktiv unterschiedliche, jedoch funktionell gleichartige Teile erhalten dieselben Bezugszeichen mit einem nachgestellten "c". Der zentrale Unterschied gegenüber der ersten Ausführungsform besteht in der Ausgestaltung des Arbeitsraumes. Der Außendurchmesser D_{K} des Kolbenabschnitts 19c und der Außendurchmesser D_{A} des Arbeitsraumabschnittes 18c sind gleichgroß. Der Arbeitsraum 21c wird durch eine sich in Richtung 5 erstreckende Längssicke im Mantelrohr 2 gebildet. In diesem Bereich ist das Mantelrohr 2 nach außen gewölbt, so daß der Arbeitsraum 21c im wesentlichen die Form eines längs halbierten Zylinders hat. Die an den jeweiligen Längsenden des Arbeitsraumes 21c vorgesehenen Dichtungen 8c und 12c liegen sowohl gegenüber dem Mantelrohr 2 als auch gegenüber dem Gleitrohr 4 an. Anstelle des Ringes 22 im ersten Ausführungsbeispiel ist ein am Gleitrohr 4 befestigter, radial gegenüber diesem vorstehender, an dem Mantelrohr 2 im Bereich der Längssicke gleitend anliegender Räumstift 41 vorgesehen. Der Räumstift 41 ist als Arbeitsraum-Volumenreduktions-Einheit ausgebildet. Zur Führung des Gleitrohres 4 im Mantelrohr 2 ist der Außendurchmesser D_{A} des Gleitrohres 4 so ausgebildet, daß er abgesehen von einem geringfügigen Spiel dem Innendurchmesser D_{M} des Mantelrohres 2 entspricht, d.h. die Rohre 2 und 4 sind ineinander verschiebbar geführt. Das Verschluß-Element 25c entspricht im Grundaufbau dem Verschluß-Element 25a der ersten Ausführungsform. Der wesentliche Unterschied besteht darin, daß sich an die Öffnung 24 zwei Öffnungen 34 und 35 mit verschieden großem Querschnitt anschließen, wobei der Querschnitt der Öffnung 34 kleiner ist als der Querschnitt der Öffnung 35. Die Öffnungen 34 und 35 sind jeweils durch einen Bolzen 32 versperrt. Im Betrieb wird durch die Auslöse-Einheit 27 mindestens ein Bolzen 32 ausgeschoben. Durch die durch den Aufprall auf das Gleitrohr 4 wirkende Kraft wird der Räumstift 41 in dem Arbeitsraum 21c verschoben, wodurch das entsprechend verdrängte Material durch die Öffnung 24 ausgeschoben wird. Ein Unterschied gegenüber der ersten Ausführungsform besteht darin, daß das Volumen des Arbeitsraumes 21c sehr viel kleiner ist als das Volumen des Arbeitsraumes 21 gemäß der ersten Ausführungsform. Dies bedeutet, daß weniger Dämpfungsmedium 20 beim Dämpfungsprozeß ausgeschoben werden muß. Dies heißt, daß der Dämpfer 1c bereits bei kleineren auf ihn wirkenden Kräften dämpfend anspricht. Durch die Veränderung des Volumens des Arbeitsraumes kann somit die Dämpfüngskennlinie entsprechend verändert werden. Durch die Auslöse-Einheit 27 können die Öffnungen 34 und 35 wie bei der zweiten Ausführungsform separat angesteuert werden. Dies bedeutet, daß nur die Öffnung 34, nur die Öffnung 35 oder die Öffnungen 34 und 35 gemeinsam freigegeben werden können. Wie bei der zweiten Ausführungsform lassen sich hierdurch drei verschiedene Kennlinien einstellen. Es ist selbstverständlich möglich, die Öffnung 24 lediglich durch ein Verschlußelement wie bei der ersten Ausführungsform zu verschließen.

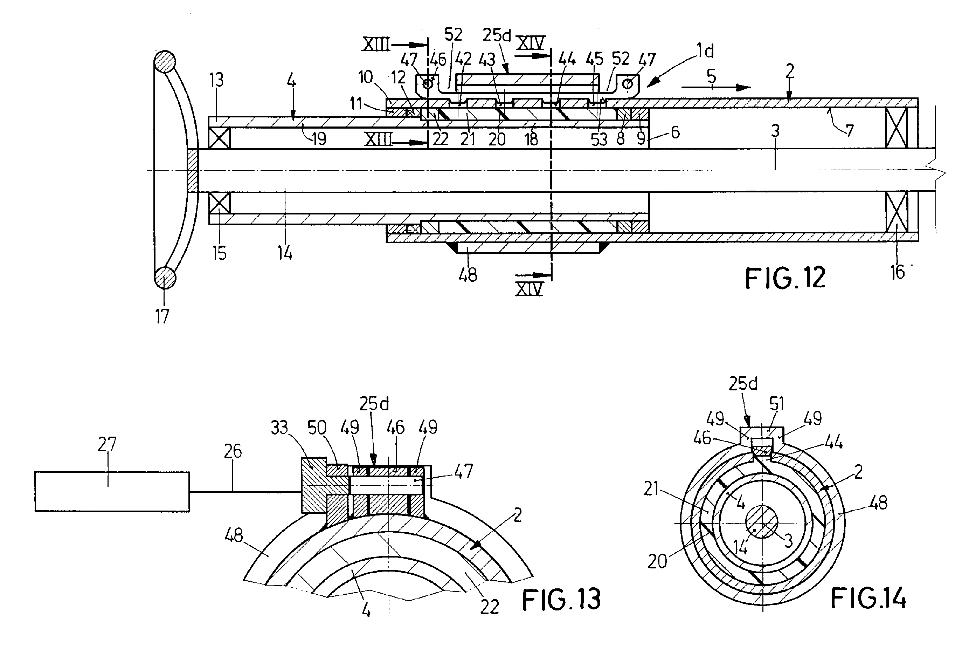

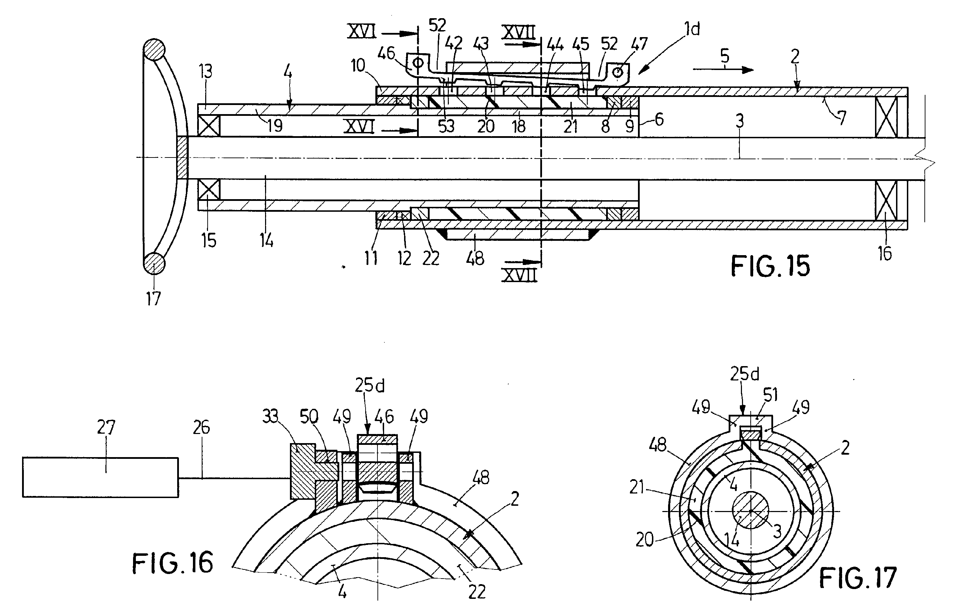

Im folgenden wird unter Bezugnahme auf die Fig. 12 bis 17 eine fünfte Ausführungsform der Erfindung beschrieben. Identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem dahintergesetzten "d". In den Fig. 12 bis 14 ist der Lenksäulendämpfer 1d in einer Ausgangsstellung gezeigt. In den Fig. 15 bis 17 ist der Lenksäulendämpfer 1d in einer möglichen Auslösestellung dargestellt. Der zentrale Unterschied gegenüber dem ersten Ausführungsbeispiel besteht im wesentlichen in dem Aufbau des Verschlußelementes 25d. Der Ring 22 liegt an seiner Außenseite an der Innenwand des Mantelrohres 2 an, wie dies als eine Alternative beim ersten Ausführungsbeispiel beschrieben ist. Das Mantelrohr 2 weist in Richtung 5 mehrere hintereinander liegende Öffnungen 42, 43, 44 und 45 auf, die in den ringzylindrischen Arbeitsraum 21 münden. Die Öffnungen 42 bis 45 sind durch eine Wippe 46 verschlossen, die an ihren beiden Längsenden jeweils mit einem Gelenkstift 47 an einer Manschette 48 angelenkt ist. Die Manschette 48 ist entlang ihres Umfanges mit Ausnahme des Bereichs, in dem die Wippe 46 angeordnet ist, ringzylindrisch ausgebildet und umgibt das Mantelrohr 2 im wesentlichen über die Länge des Arbeitsraumes 21. Die Manschette 48 ist mit dem Mantelrohr 2 verschweißt. Im Bereich der Wippe 46 weist die Manschette 48 zwei einander gegenüberliegende, radial vorstehende Stege 49 auf, in denen die Gelenkstifte 47 in zugehörigen Bohrungen gehalten sind. Benachbart zu einem Steg 49 ist ein weiterer Steg 50 an der Manschette 48 vorgesehen, in dem die Zündkapsel 33 in einer entsprechenden Bohrung gehalten ist, so daß das Ende der Zündkapsel benachbart zu einem Ende des Gelenkstiftes 47 angeordnet ist. Entlang eines axialen Mittelbereiches der Manschette 48 sind die Stege 49 durch eine einteilig mit diesen ausgebildete Schulter 51 miteinander verbunden, wobei zwischen den längsseitigen Enden der Schulter 51 und den Stiften 47 zwei Austrittsöffnungen 52 vorgesehen sind. An der Unterseite der Wippe 46 sind den Öffnungen 42 bis 45 im Durchmesser entsprechende Vorsprünge 53 vorgesehen, die eine Abdichtung der zugehörigen Öffnungen sicherstellen.

Bei einem Aufprall wird durch die Auslöseeinheit 27 ein Gelenkstift 47 herausgeschossen. Die Wippe 46 wird durch den im Dämpfüngsmedium 20 herrschenden Druck in den in den Fig. 15 bis 17 dargestellten Zustand verschwenkt. Hierdurch werden die Öffnungen 42 bis 45 in abnehmendem Maße freigegeben. Dies bedeutet, daß bei einer geringen Einschubtiefe des Gleitrohres 4 vergleichsweise viel Dämpfungsmedium 20 durch die vollkommen freigegebene Öffnung 42 ausgeschoben werden kann. Mit zunehmender Einschubtiefe wird der verbleibende Querschnitt immer geringer. Dies bedeutet, daß die zum Einschieben erforderliche Kraft mit zunehmender Einschubtiefe immer größer wird. Für den alternativen Fall, daß der am im Richtung 5 liegenden Ende der Wippe 46 angeordnete Gelenkstift 47 entfernt wird, bedeutet dies umgekehrt, daß mit zunehmender Einschubtiefe die zum Einschieben erforderliche Kraft immer geringer wird. Es kann somit der Kennlinienverlauf entsprechend beeinflußt werden.

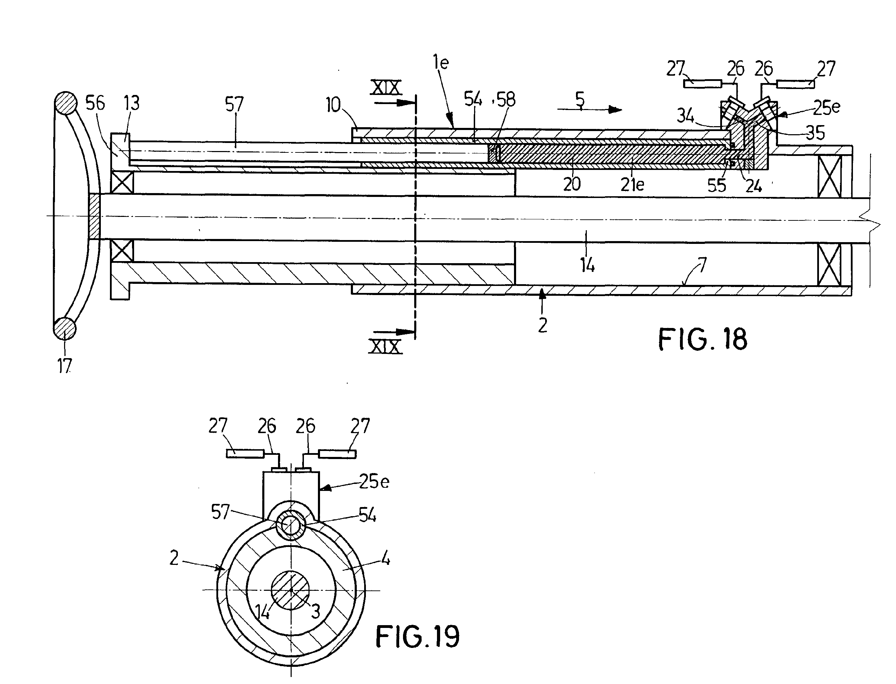

Im folgenden wird unter Bezugnahme auf die Fig. 18 und 19 eine sechste Ausführungsform der Erfindung beschrieben. Identische Teile erhalten dieselben Bezugszeichen wie bei der ersten Ausführungsform, auf deren Beschreibung hiermit verwiesen wird. Konstruktiv unterschiedliche, jedoch funktionell gleichartige Teile erhalten dieselben Bezugszeichen mit einem nachgestellten "e". Das Mantelrohr 2 weist eine Längssicke und das Gleitrohr 4 eine entsprechende Längsnut auf, wobei zwischen dem Mantelrohr 2 und dem Gleitrohr 4 ein in Sicke und Nut angeordnetes, ringzylindrisches Arbeitsraumgehäuse 54 mit einem am in Richtung 5 liegenden Ende angeordneten Boden 55 angeordnet ist. Das Gleitrohr 4 ist über einen am Ende 13 befindlichen Flansch 56 mit einer parallel zur Richtung 5 verlaufenden Kolbenstange 57 verbunden, die in dem Gehäuse 54 verschiebbar geführt ist. Am in Richtung 5 liegenden Ende der Kolbenstange 57 ist eine Dichtung 58 vorgesehen. Der im Innenraum des Gehäuses 54 befindliche Arbeitsraum 21e ist mit dem Dämpfungsmedium 20 gefüllt. Der Boden 55 weist eine Öffnung 24 auf, die mit dem Verschlußelement 25e verschlossen ist. Bei einem Aufprall geben die Auslöse-Einheiten 27 die Öffnung 34, die Öffnung 35 oder beide frei. Wie bei dem vierten Ausführungsbeispiel weisen die beiden Öffnungen unterschiedliche Querschnitte auf. Auf diese Weise können drei verschiedene Kennlinien eingestellt werden. Vorteilhaft an der Anordnung gemäß den Fig. 18 und 19 ist, daß das Dämpfungsmedium 20 in einem separaten Arbeitsraumgehäuse 54 angeordnet ist, so daß die gesamte Anordnung besonders einfach abzudichten ist.

## Patentansprüche

1. Lenksäulendämpfer für ein Kraftfahrzeug mit
a) einem Mantelrohr (2) mit einer Mittel-Längs-Achse (3),
b) einem in dem Mantelrohr (2) verschiebbar geführten Gleitrohr (4),
c) einer gegenüber dem Gleitrohr (4) und/oder dem Mantelrohr (2) um die Mittel-Längs-Achse (3) verschwenkbar gelagerten, durch das Mantelrohr (2) und das Gleitrohr (4) geführten Lenkwelle (14),
d) mindestens einem zwischen dem Mantelrohr (2) und dem Gleitrohr (4) angeordneten, mit einem Dämpfungs-Medium (20) gefüllten Arbeitsraum (21; 21c; 21e),
e) mindestens einer mit dem Gleitrohr (4) verbundenen Arbeitsraum-Volumenreduktions-Einheit zur Reduktion des Volumens des mindestens einen Arbeitsraumes (21; 21c; 21e) beim Einschieben des Gleitrohres (4) in das Mantelrohr (2),
f) mindestens einer den mindestens einen Arbeitsraum (21; 21c; 21e) mit der Umgebung verbindenden Öffnung (24; 34, 35; 42, 43, 44, 45) zur Abführung des Dämpfungs-Mediums aus dem jeweiligen Arbeitsraum (21; 21c; 21e),
g) jeweils einem Verschlußelement (25; 25a; 25b; 25c; 25d; 25e) zum Verschließen der mindestens einen Öffnung (24; 34, 35; 42, 43, 44, 45) und
h) einer Auslöse-Einheit (27) zur steuerbaren Öffnung des jeweiligen Verschlußelements (25; 25a; 25b; 25c; 25d; 25e).

2. Lenksäulendämpfer gemäß Anspruch 1, **dadurch gekennzeichnet, daß** die Arbeitsraum-Volumenreduktions-Einheit einen Kolben (19; 57) aufweist, der mit dem Gleitrohr (4) verbunden ist.

3. Lenksäulendämpfer gemäß Anspruch 1 oder 2, **dadurch gekennzeichnet, daß** der Arbeitsraum (21) ringzylindrisch ausgebildet ist.

4. Lenksäulendämpfer gemäß Anspruch 1, **dadurch gekennzeichnet, daß** die Arbeitsraum-Volumenreduktions-Einheit einen mit dem Gleitrohr (4) verbundenen, in den Arbeitsraum (21c) vorstehenden Stift (41) aufweist.

5. Lenksäulendämpfer gemäß Anspruch 4, **dadurch gekennzeichnet, daß** der Arbeitsraum (21c) kanalartig ausgebildet ist.

6. Lenksäulendämpfer gemäß Anspruch 1, **dadurch gekennzeichnet, daß** die Arbeitsraum-Volumenreduktions-Einheit eine exzentrisch zur Mittel-Längs-Achse (3) angeordnete, parallel zu dieser verlaufende Kolbenstange (57) aufweist.

7. Lenksäulendämpfer gemäß Anspruch 6, **dadurch gekennzeichnet, daß** der Arbeitsraum (21e) zylinderförmig ausgebildet ist.

8. Lenksäulendämpfer gemäß einem der vorangehenden Ansprüche, **dadurch gekennzeichnet, daß** zwei Öffnungen (34, 35) vorgesehen sind.

9. Lenksäulendämpfer gemäß Anspruch 8, **dadurch gekennzeichnet, daß** die zwei Öffnungen (34, 35) verschiedene Querschnitte besitzen.

10. Lenksäulendämpfer gemäß Anspruch 1, **dadurch gekennzeichnet, daß** das Verschlußelement (25b) eine Einheit (38) zur Veränderung des Querschnitts der zugehörigen Öffnung (24) aufweist.
